# EUROPEAN PATENT APPLICATION

(11) **EP 4 064 757 A1**
(43) Date of publication of application: **28.09.2022**
(21) Application number: 21163918.2
(22) Date of filing: 22.03.2021
(51) Int. Cl.: H04W 36/00, H04W 36/32

(54) **HANDOVER-SERVICE PREPARATION VIA PRE-ANNOUNCEMENT**

(71) Applicant: Robert Bosch GmbH, 70442 Stuttgart (DE)
(72) Inventor: Schuengel, Maximilian, 89340 Leipheim (DE); Schoeffler, Michael, 75365 Calw-Altburg (DE); Ginthoer, David Osamu, 71229 Leonberg (DE)

(57) **Abstract**

There is provided a method comprising: serving (102) at least one radio terminal (UE1) with user data associated with at least one traffic flow (F); and transmitting (110, 112) at least one message comprising at least one parameter associated with the at least one traffic flow (F) or associated with the at least one radio terminal (UE1).

## Description

### State of the Art

There are provided advancements in the field of radio communication, in particular in the field of handover procedures involving radio access nodes.

### Disclosure of the invention

According to a first aspect of the description, there is provided a method comprising: serving at least one radio terminal with user data associated with at least one traffic flow; and transmitting at least one message comprising at least one parameter associated with the at least one traffic flow or associated with the at least one radio terminal.

Advantageously, the radio access node informs other radio access nodes about possible handover procedures. The radio terminal being handed over will be served with its stringent service requirements in terms of latency and reliability. When the radio terminal leaves the coverage are of the currently serving radio access node, it or the serving radio access node will initiate a handover to the next radio access node where the radio terminal is located at. Maintaining those service requirements during handover is achieved by the at least one message. Service interruptions are avoided. Furthermore, it is evident before handover, that the new access node can meet the current service level agreement (SLA) of the radio terminal.

According to an advantageous example, the method comprises: selecting a subset from a plurality of traffic flows being served, especially the at least one traffic flow, based on the respective at least one parameter and/or at least one another parameter associated with the respective traffic flow.

Advantageously, control signaling between the radio access nodes is reduced to cases of the subset, where the traffic requirements are strict. Other traffic flows with reduced traffic requirements are excluded from the handover service preparation. Of course, for the former traffic flows / radio terminals, the handover is also available.

According to an advantageous example, the at least one parameter associated with the at least one traffic flow comprises a QoS information associated with the traffic flow.

Advantageously, the QoS information indicates that there is a probability that a certain data flow will be handed over.

According to an advantageous example, the at least one parameter associated with the at least one traffic flow comprises a mobility information associated with the at least one radio terminal.

By providing mobility information of the radio terminal, implicitly a probability of a handover is transmitted.

According to a second aspect of the description, an apparatus, in particular a source radio access node, is provided that comprises: serving means to serve at least one radio terminal with user data associated with at least one traffic flow; and transmitting means to transmit at least one message comprising at least one parameter associated with the at least one traffic flow or associated with the at least one radio terminal.

According to a third aspect of the description, a method comprises: receiving at least one message comprising at least one parameter associated with at least one traffic flow or associated with at least one radio terminal; receiving a handover request; determining an admission indicator, which indicates whether the handover request is admitted, based on the at least one parameter; and transmitting a handover request response based on the admission indicator. Advantageously, the at least one handover service preparation message enables the receiving radio access node to quickly respond and attend the handover request.

According to an advantageous example, the method comprises: allocating, especially prior to the determination of the admission indicator, at least one radio resource, which is associated with at least one expected admission of at least one handover and/or an associated traffic flow, based on the received at least one parameter.

Advantageously, the at least one radio resource is allocated and exclusively reserved for a transmission and/or reception of a traffic flow that is possibly being handed over to the radio access node receiving the at least one parameter. If a flow/radio terminal is served at one radio access node, it is granted exclusive resources, for example in a periodic manner. If a flow\radio terminal is not attached to at one radio access node, the radio resources are allocated and reserved, but not exclusively to a specific flow\radio terminal: 1) Different flows\radio terminals with the same service class and QoS requirements may request this resource upon handover, so the radio resource is exclusive to a class of flows/radio terminals; 2) As long as no flow of the class of flows eligible to the reserved radio resources is attached, any non-critical service can use the reserved radio resources. However, it will loose its access to it, once an eligible flow/radio terminal performs a handover to the radio access node. Preferably, only a non-critical service tolerates a sudden denial of radio resource.

According to an advantageous example, the handover request response comprises at least one radio resource indicator that indicates the allocated at least one radio resource.

Advantageously, the other radio access node can inform the radio terminal about the at least one radio resource to be used.

According to an advantageous example, the method comprises: exclusively reserving the allocated at least one radio resource for the at least one radio terminal, if the admission indicator indicates that the received handover request is admitted.

Advantageously, the pre-allocated radio resource is now reserved and is not available for other handovers.

According to an advantageous example, the method comprises: exclusively reserving at least one radio resource for the at least one radio terminal, if the admission indicator indicates that the handover request is admitted, wherein the at least one radio resource is occupied by low priority traffic.

Advantageously, the traffic flow associated with the at least one radio terminal overrides / punctures other low priority traffic in order to be served within the QoS limits.

According to an advantageous example, the at least one parameter associated with the at least one traffic flow comprises a QoS information associated with the traffic flow.

Advantageously, the QoS information indicates that there is a probability that a certain data flow will be handed over.

According to an advantageous example, the at least one parameter associated with the at least one traffic flow comprises at least one mobility information associated with the at least one radio terminal.

By providing mobility information of the radio terminal, implicitly a probability of a handover is transmitted.

According to an advantageous example, the at least one mobility information comprises a plurality of sets, a respective one of the sets comprising a spatial coordinate and an associated approaching probability, that indicates how likely it is that the at least one radio terminal approaches the respective spatial coordinate; and wherein the allocating of the at least one radio resource comprises: determining a radio resource demand based on the plurality of sets and based on a location of the access node; and allocating the at least one radio resource based on the radio resource demand.

Advantageously, the mobility information advances the resource reservation / allocation for high priority traffic flows that are handed over.

According to a fourth aspect of the description, an apparatus is provided, in particular a target radio access node, wherein the apparatus comprises: receiving means for receiving at least one message comprising at least one parameter associated with at least one traffic flow or associated with at least one radio terminal; receiving means for receiving a handover request; determining means for determining an admission indicator, which indicates whether the handover request is admitted, based on the at least one parameter; and transmitting means for transmitting a handover request response based on the admission indicator.
- Figure 1: depicts a schematic sequence diagram;
- Figure 2: depicts a schematic flow diagram;
- Figure 3: depicts an exemplary radio access network;
- Figure 4: depicts a radio resource reservation situation; and
- Figure 5: depicts a schematic path of a radio terminal.

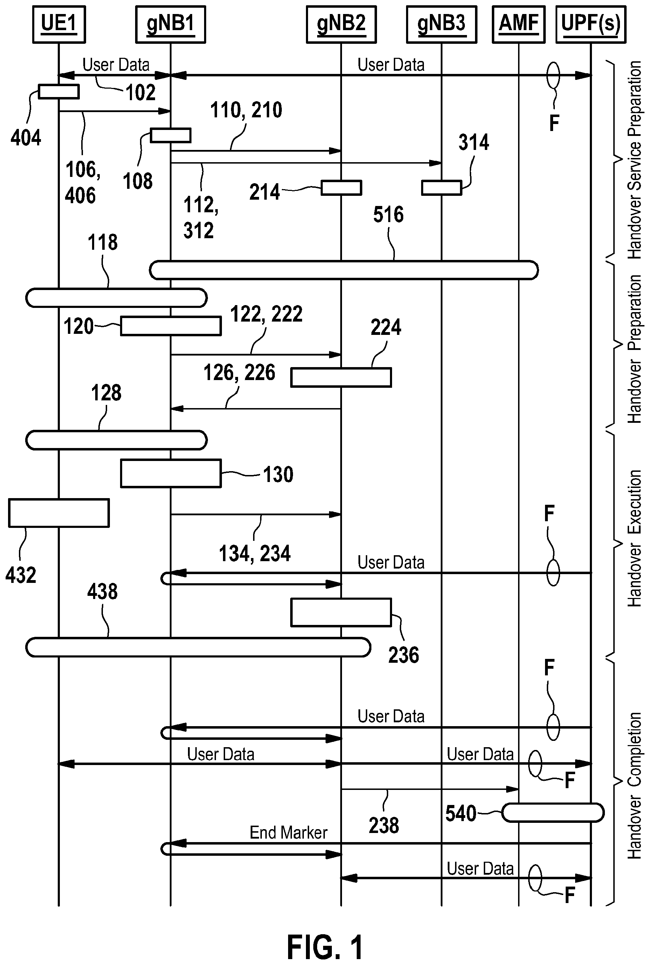

Figure 1 depicts a schematic sequence diagram. An apparatus, in particular a source radio access node gNB1, comprises serving means 102 to serve, via at least one radio access interface, at least one radio terminal UE1 with user data associated with at least one traffic flow F.

The radio terminal UE1 comprises determining means 404 to determine radio measurements and/or future waypoints. Transmitting means 406 are provided to transmit at least one of the radio measurements and/or at least one future waypoint towards an apparatus gNB1.

Receiving means 106 are provided at the apparatus gNB1 to receive the measurements and/or future waypoints and a selection, according to selection means 108, is conducted based on the provided measurements and/or future waypoints. The selection means 108 select a subset from a plurality of traffic flows being served by the radio access node gNB1, especially the at least one traffic flow, based on the respective at least one parameter and/or at least one another parameter associated with the respective traffic flow F.

Transmitting means 110, 112 of the apparatus gNB1 are configured to transmit, via at least one radio access node interconnecting interface, especially an Xn interface, at least one message comprising at least one parameter associated with the at least one traffic flow F or associated with the at least one radio terminal UE1, towards an apparatus gNB2, gNB2 that represents a target radio access node for a handover operation.

Receiving means 210, 312 of gNB2, gNB3 are provided for receiving, via the at least one radio access node interconnecting interface, especially the Xn interface, at least one message comprising the at least one parameter associated with at least one traffic flow F, which is presently not being served by the radio access node gNB2, gNB3 or associated with at least one radio terminal UE1.

According to an example, the at least one measurement represents at least one parameter associated with the at least one traffic flow F.

For example, the at least one parameter associated with the at least one traffic flow F comprises or is a QoS information associated with the traffic flow F.

For example, the at least one parameter associated with the at least one traffic flow comprises or is a mobility information like possible future waypoints associated with the at least one radio terminal UE1.

According to an example, the at least one waypoint represents the at least one parameter associated with the at least one radio terminal UE1.
The at least one parameter transmitted by transmitting means 110, 112 can be called announcement information and may include two aspects: the service type and the frequency at which this service is going to be requested at the access node gNB2, gNB3. The service is mainly defined by traffic related parameters, which include, but are not limited to at least one of the following: occurrence (cyclic or sporadic), cycle time, maximum burst size, frame size, priority of the user data, reliability requirements, delay budget.

According to an example, the at least one parameter comprises Time Sensitive Traffic Assistance Information (TSCAI), which contains QoS flow related information.

Hence, it is advantageous to inform radio acess nodes gNB2-3 about possible handover procedures beforehand. Then it is up to gNB2-3 how this information is used to serve radio acess node UE1. For example, if the requested service has only soft real-time requirements or gNB2, gNB3 has a very low network utilization, gNB2, gNB3 can decide to perform handover on request as in state-of-the-art systems. If however the requested service from the UE1 has increased latency requirements, the gNB2, gNB3 decides to take pro-active measures to guarantee the service. The handover pre-configuration can be split into two parts, i.e. handover pre-announcement, where the handover related information are provided to relevant gNB2, gNB3, and handover reservation where the actual scheduling or reservation at gNB2, gNB3 is executed.

Providing the at least one parameter beforehand is used at gNB2, gNB3 to decide if a service requires an explicit reservation of resources or if the requirements can be met without the reservation. This decision can change throughout operation and be, e.g. depending on the current status of gNB2, gNB3, for example the load of the radio channel. If the network is approaching full network utilization, gNB2, gNB3 decides to reserve radio resources depending on the type of service it is expecting to serve.

According to an example, the at least one parameter indicates the frequency of the service request. This includes the number of UEs potentially requesting the service from the BS, the sojourn time of each UE and other mobility related information. This data can either be explicitly forwarded to the handover pre-configuration instance via context information, or learned and adjusted throughout operation.

Allocating means 214, 314 are provided to allocate, via at least one radio access interface of gNB2 or gNB3, especially prior to the determination of the admission indicator, at least one radio resource, which is associated with at least one expected admission of at least one handover and/or an associated traffic flow, based on the received at least one parameter.

For example, if other traffic flows already arrived at the radio access node gNB2, gNB3 and/or the processing capacity of the radio access node gNB2, gNB3 is not sufficient to serve the traffic flow associated with the handover procedure, then the radio access node will transmit a handover request NACK, negating the admission of the handover.

If the allocated radio resources are available to serve the traffic flow, the handover procedure can continue, according to the Handover Preparation, to handover the radio terminal UE1 and its traffic flow to the new serving radio access node gNB2.

The section 'Handover Service Preparation' is provided to prepare the actual Handover, which is conducted in the sections 'Handover Preparation', 'Handover Execution', and 'Handover Completion'.

There is provided a pre-configuration in the handover procedure, the 'Handover Service Preparation'. The pre-configuration comprises two steps: In the first handover pre-announcement step, we use traffic pattern information, represented by the at least one parameter associated with the data flow, before the handover process. Using this additional input, the service requirements of the data flow subject to handover is addressed suitably in order to maintain its Quality of Service (QoS). In the second handover reservation step, we propose to use a service-based reservation for the handover on different access points in order to reduce configuration overhead during the actual handover. Further, the handover reservation allows for a faster execution with the goal to maintain uninterrupted service provision.

Accordingly, the pre-configuration is conducted for gNB2-3 that are considered for the radio terminal UE1 to be likely to be handed-over, with traffic flow related details. This procedure is especially useful for services with deterministic traffic and very stringent requirements to avoid additional delays by the handover execution.

According to the block 516, the UE context of UE1 within the source gNB1 contains information regarding roaming and access restrictions, which were provided either at connection establishment or at the last TA update.

According to determination means 120, gNB1 determines to handover UE1, in particular based on the received measurements. The corresponding handover request is transmitted via transmitting means 122. Receiving means 222 are provided at gNB2 to receive, via at least one radio access node interconnecting interface, the handover request. The source gNB1 issues the Handover Request message to the target gNB2 passing a transparent RRC container with information to prepare the handover at the target side. The information includes at least the target cell ID, KgNB*, the C-RNTI of the UE1 in the source gNB, RRM-configuration including UE inactive time, basic AS-configuration including antenna Info and DL Carrier Frequency, the current QoS flow to DRB mapping rules applied to the UE, the SIB1 from source gNB, the UE capabilities for different RATs, PDU session related information, and can include the UE reported measurement information including beam-related information if available. The PDU session related information includes the slice information and QoS flow level QoS profiles. The source gNB may also request a DAPS handover for one or more DRBs.

Determining means 224 are provided to determine an admission indicator, which indicates whether the received handover request is admitted or not, based on the at least one parameter.

According to an example, the determining means 224 exclusively reserve the previously allocated at least one radio resource for the at least one radio terminal UE1, if the admission indicator indicates that the received handover request is admitted.

According to another example, the determining means 224 exclusively reserve at least one radio resource for the at least one radio terminal UE1, if the admission indicator indicates that the handover request is admitted, wherein the at least one radio resource is occupied by low priority traffic.

If the handover request is admitted, transmitting means 226 are configured to transmit, via the at least one radio access node interface and/or via the radio access interface, a handover request response based on the admission indicator. The handover request response comprises at least one radio resource indicator that indicates the allocated at least one radio resource. Accordingly, the target gNB2 prepares the handover with L1/L2 and sends a handover request acknowledgement to the source gNB1, which includes a transparent container, which comprises the radio resource indicator, to be sent to the UE1 as an RRC message to perform the handover. According to an example not shown, the target gNB2 also indicates if a handover is not accepted via a non-acknowledgement.

Upon receiving 126 the handover request, gNB1 triggers via triggering means 128 the Uu handover by sending an RRCReconfiguration message to UE1, containing the information required to access the target cell: at least the target cell ID, the new C-RNTI, the target gNB security algorithm identifiers for the selected security algorithms. It can also include a set of dedicated RACH resources, the association between RACH resources and SSBs, the association between RACH resources and UE-specific CSI-RS configurations, common RACH resources, and system information of the target cell, etc.

Transmitting means 130 deliver buffered data and new data from UPFs from gnB1 to UE1. Detaching means 432 are configured to detach UE1 from the old cell of gNB1 and synchronize UE1 to the new cell of gNB2.

Transmitting means 134 transmit a status transfer message from gNB1 to gNB2. gnB2 receives the status transfer message via receiving means 234.

Buffering means 236 of gNB2 buffer data from gNB1 at gNB2.

According to block 438, UE1 synchronizes to the target cell being served by target gNB2 and completes the RRC handover procedure by sending RRCReconfigurationComplete message to target gNB2. UE1 releases the source SRB resources, security configuration of the source cell and stops DL/UL reception/transmission with the source upon receiving an explicit release from gNB2.

Transmitting means 238 of gNB2 transmit a path switch request to AMF in order to trigger 5GC to switch the DL data path towards the target gNB2 and to establish an NG-C interface instance towards the target gNB2.

According to a block 540, 5GC 5G Core network switches the DL data path towards the target gNB2. The UPF (UPF: User Plane Function) sends one or more "end marker" packets on the old path to the source gNB per PDU session/tunnel and then can release any U-plane/TNL resources towards the source gNB1.

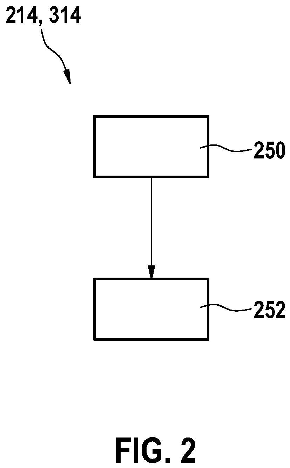

Figure 2 depicts a schematic flow diagram of the allocating means 214, 314 of figure 1. The at least one mobility information comprises a plurality of sets, a respective one of the sets comprising a spatial coordinate and an associated approaching probability, that indicates how likely it is that the at least one radio terminal approaches the respective spatial coordinate especially at a specified point in time. In particular, an image-like map can be provided with probabilities and points in time being associated with a certain spatial coordinate. Determining means 250 are provided to determine a radio resource demand based on the plurality of sets and based on a location of the target access node gNB2, gNB3 of figure 1. Allocating means 252 allocate the at least one radio resource based on the radio resource demand determined.

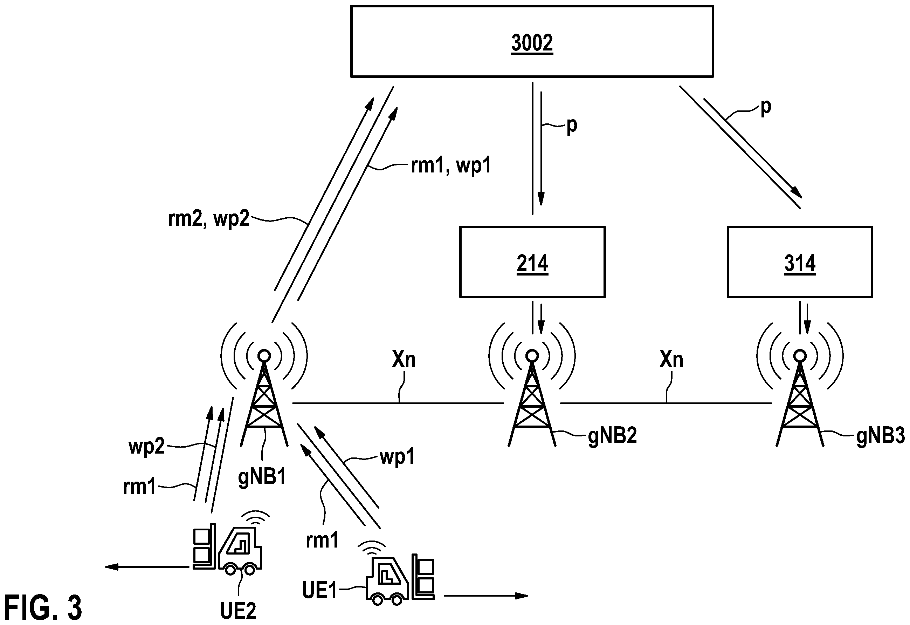

Figure 3 depicts a schematic radio situation. Multiple AGVs (AGV: Automated Guided Vehicle) comprise a respective UE1, UE2 and provide similar traffic patterns. The AGVs are moving in the network setup comprised of multiple radio access nodes gNB1-3. Based on traffic and mobility pattern information provided by each UE in the pre-announcement stage, a service-based information set, the at least one parameter, is determined. The radio resources for the handover procedure are reserved based on the traffic pattern, for example.

The radio terminal UE1, UE2 determines radio measurements rm1, rm2 and/or future waypoints wp1, wp2 via determining means and transmit them towards the serving access node gNB1. The radio measurements rm1, rm2 and/or the future waypoints wp1, wp2 are transmitted from gNB1 to a handover service preparation function 3002. The function 3002 determines the at least one parameter p associated with the radio terminal and/or associated with the traffic flow. The at least one parameter p indicated the traffic type of the service for handover and/or an occurrence information. The radio acess node gNB2, gNB3 prepares itself for a possible handover by proactively reserving radio resources for the radio terminal UE1, which moves towards the cells, which are served by radio acess nodes gNB2, gNB3.

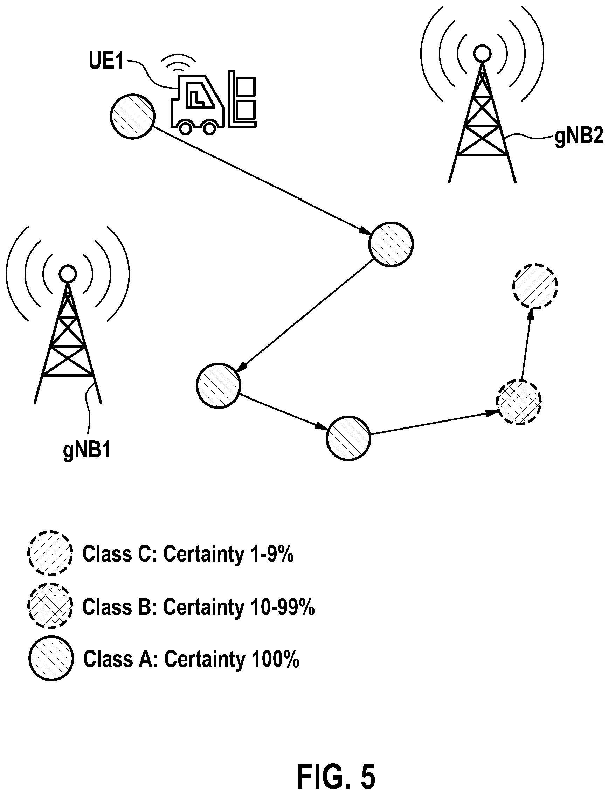

When mobility pattern of radio terminals UE1, UE2 in the network are configured beforehand, gNB2, gNB3 benefit from context information to predict handover procedures with higher certainty. In the exemplary use case of AGVs in a factory environment, this context data can be derived from a standardized configuration interface as defined in the VDA5050. The mobility pattern is configured via graphs consisting of nodes and edges, along the vehicles are traveling, as shown in Fig. 5. Knowing the coordinates of each waypoint in the network, gNB2, gNB3 can be configured accordingly to allocate the necessary resources. Adapting the classification of the nodes in the handover process allows prioritizing handover for UE1, which is likely to enter the cell of gNB2 or gNB3, hence meeting the application requirement.

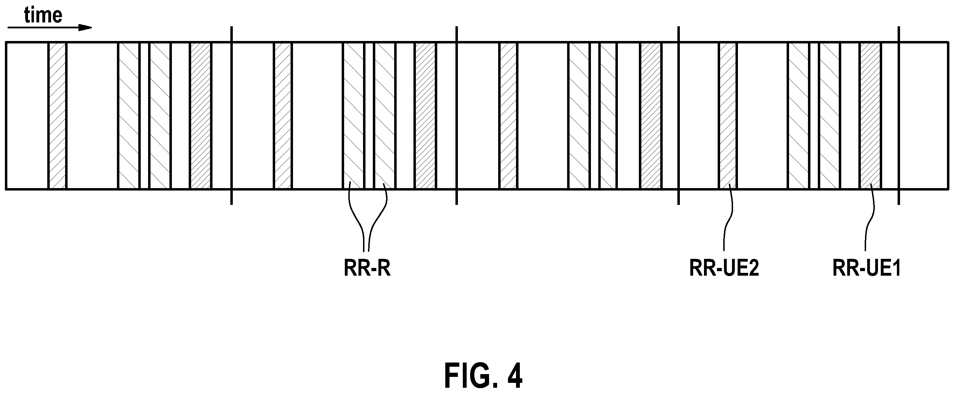

Figure 4 depicts a radio resource reservation / radio resource assignment of one radio access terminal. The pre-announcement comprises the transmission/reception of the at least one parameter, which indicates at least one of: stream parameters, service requirements and mobility pattern. Each radio access node performs measures to reserve radio resources. As previously stated, the actual reservation of resources is specific to the radio access node and depends on its current status with regard to available processing capacity and with regard to available radio resources. The provided service-based reservation is suitable when multiple UEs with frequent handovers share the same periodic traffic pattern.

The UE1 and UE2 of figure 3 have exclusive access to their reserved radio resources RR_UE1, RR_UE2. Remaining reserved resources RR_R are currently not used by a radio terminal. If a new radio terminal attaches during handover with the same traffic pattern, it is eligible to use those pre-configured radio resources. For example, a reservation of radio resources RR_R is based on a number, for example the maximum number, of UEs expected to be attached at the radio acess node with the same or similar traffic pattern, but not for each UE itself. According to an example, the number of UEs expected to be attached is determined based on the image-like map with coordinates and associated probability information as described above in connection with figure 2.

The reservation of radio resources RR_R shall not be exclusive as long as no UE is attached using at least a part of the radio resources RR_R. The reservation shall only restrict the type of UEs eligible to use the resources. In general, these are UEs with non-guaranteed bitrate bearers of low priority services, also referred to as best effort traffic. If a radio resource is occupied by best effort traffic, a high priority service as in the AGV example is eligible to overrule the low priority traffic in the scheduling stage, such that the availability of radio resources for high priority traffic can be guaranteed. For example, a high priority UE is allowed to superpose or puncture an ongoing best effort transmission. However, if the radio resources are already occupied by an application with high priority and guaranteed resources, it is not eligible for pre-emption. A resource scheduler of the radio access node shall take this into account and assign transmission resources to the respective UEs based on their service requirements.

Figure 5 depicts a schematic path of the radio terminal UE1. Each node type is assigned to a specific certainty that represents the probability an AGV associated with the radio terminal UE1 will approach a specific node/waypoint. For example, the user defined three different classes (A, B, and C). The class A nodes correspond to nodes, the AGV will move to it having a certainty of 100. The other node types B and C correspond to different node types having different probabilities to be approached by the AGV.

According to an example, information about the path of radio terminal UE1 changes throughout operation of the system. According to a first example, the probabilities of certain waypoints becomes higher or lower over time, as the AGV approaches the waypoints. According to a second example, the AGV is assigned a new task, hence the nodes and probabilities change accordingly. In case of the second example, the reservation at a gNB is initiated and/or the number of existing reservations at an access node gNB is increased, for example if the estimation on the maximum number to be supported simultaneously increases. In case of the second example, radio resources are freed up, if it becomes unlikely that a user will perform a handover to a particular gNB.

## Claims

1. A method comprising:
serving (102) at least one radio terminal (UE1) with user data associated with at least one traffic flow (F); and
transmitting (110, 112) at least one message comprising at least one parameter associated with the at least one traffic flow (F) and/or associated with the at least one radio terminal (UE1).

2. The method according to claim 1 comprising
selecting (108) a subset from a plurality of traffic flows being served, especially the at least one traffic flow, based on the respective at least one parameter and/or at least one another parameter associated with the respective traffic flow (F).

3. The method according to one of the preceding claims, wherein the at least one parameter associated with the at least one traffic flow (F) comprises a QoS information associated with the traffic flow (F).

4. The method according to one of the preceding claims, wherein the at least one parameter associated with the at least one traffic flow comprises a mobility information associated with the at least one radio terminal (UE1).

5. An apparatus, in particular a source radio access node (gNB1), comprising:
serving means (102) to serve at least one radio terminal (UE1) with user data associated with at least one traffic flow (F); and
transmitting means (110, 112) to transmit at least one message comprising at least one parameter associated with the at least one traffic flow (F) or associated with the at least one radio terminal (UE1).

6. A method comprising:
receiving (210, 312) at least one message comprising at least one parameter associated with at least one traffic flow (F) and/or associated with at least one radio terminal (UE1);
receiving (222) a handover request;
determining (224) an admission indicator, which indicates whether the handover request is admitted, based on the at least one parameter;
transmitting (226) a handover request response based on the admission indicator.

7. The method according to claim 6 comprising:
allocating (214, 314), especially prior to the determination of the admission indicator, at least one radio resource, which is associated with at least one expected admission of at least one handover and/or an associated traffic flow, based on the received at least one parameter.

8. The method according to claim 6 or 7, wherein the handover request response comprises at least one radio resource indicator that indicates the allocated at least one radio resource.

9. The method according to one of the claims 7 or 8 comprising:
exclusively reserving (224) the allocated at least one radio resource for the at least one radio terminal (UE1), if the admission indicator indicates that the received handover request is admitted.

10. The method according to one of the claims 7 or 8 comprising:
exclusively reserving (224) at least one radio resource for the at least one radio terminal (224), if the admission indicator indicates that the handover request is admitted, wherein the at least one radio resource is occupied by low priority traffic.

11. The method according to one of the claims 6 to 10, wherein the at least one parameter associated with the at least one traffic flow comprises a QoS information associated with the traffic flow.

12. The method according to one of the claims 6 to 11, wherein the at least one parameter associated with the at least one traffic flow comprises at least one mobility information associated with the at least one radio terminal (UE1).

13. The method according to claim 12, wherein the at least one mobility information comprises a plurality of sets, a respective one of the sets comprising a spatial coordinate and an associated approaching probability, that indicates how likely it is that the at least one radio terminal approaches the respective spatial coordinate; and
wherein the allocating (214) of the at least one radio resource comprises:
determining (240) a radio resource demand based on the plurality of sets and based on a location of the access node (gNB2); and
allocating (242) the at least one radio resource based on the radio resource demand.

14. An apparatus, in particular a target radio access node (gNB2, gNB3), comprising:
receiving means (210, 312) for receiving at least one message comprising at least one parameter associated with at least one traffic flow (F) and/or associated with at least one radio terminal (UE1);
receiving means (222) for receiving a handover request;
determining means (224) for determining an admission indicator, which indicates whether the handover request is admitted, based on the at least one parameter;
transmitting means (226) for transmitting a handover request response based on the admission indicator.

15. A use of the method according to one of the claims 1 to 4 or 6 to 13, or of the apparatus (gNB1, gNB2, gNB3) according to one of the claims 5 and 14.
